# FASCICULE DE BREVET EUROPEEN

(11) **EP 0 802 160 B1**
(45) Date de publication et mention de la délivrance du brevet: **15.03.2000**
(21) Numéro de dépôt: 97400800.5
(22) Date de dépôt: 08.04.1997
(51) Int. Cl.: C01B 23/00, F25J 3/08

(54) **Procédé et installation de fourniture d'hélium ultra-pur**
Verfahren und Vorrichtung zur Versorgung von ultrareinem Helium
Process and apparatus for the supply of ultra-pure helium

(30) Priorité: 19.04.1996 FR 9604955
(43) Date de publication de la demande: 22.10.1997
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Castellanet, Frédéric, 78230 Le Pecq (FR); Briend, Pierre, 38170 Seyssinet (FR); Boissin, Jean-Claude, 38330 Saint Osmier (FR)
(74) Mandataire: Le Moenner, Gabriel

(56) Documents cités:
- EP-A- 0 601 601
- CRYOGENICS (1971), 11(2), 137-8 CODEN: CRYOAX, 1971, XP000615921 ABRIKOSOVA, I. I. ET AL: "Purity of liquid helium"
- CHEMICAL ABSTRACTS, vol. 73, no. 10, 7 Septembre 1970 Columbus, Ohio, US; abstract no. 47097, ABRIKOSOVA, I. I. ET AL: ""Purity" of liquid helium" XP002022529 & PRIB. TEKH. EKSP. (1970), (2), 242-3 CODEN: PRTEAJ, 1970,
- CHEMICAL ABSTRACTS, vol. 108, no. 14, 4 Avril 1988 Columbus, Ohio, US; abstract no. 115082, ASAHARA, KAZUHIKO ET AL: "Purification of liquefied helium" XP002022530 & JP 62 276 388 A (KOBE STEEL, LTD., JAPAN)
- DATABASE WPI Section Ch, Week 9222 Derwent Publications Ltd., London, GB; Class E36, AN 92-181245 XP002022531 & SU 1 419 241 A (DEVYATYKH G G) , 7 Septembre 1991

## Description

La présente invention est relative à un procédé pour fournir à une conduite d'utilisation de l'hélium ultra-pur.

Les pressions dont il est question ici sont des pressions absolues.

L'hélium ultra-pur est notamment utilisé dans l'industrie électronique, pour le maintien à température constante et le refroidissement des pastilles ("wafers") supports de circuits intégrés formant des mémoires ou des processeurs.

L'augmentation des dimensions des pastilles et la réduction de l'épaisseur des couches successives constituant les circuits intégrés ont pour conséquence une exigence croissante concernant la pureté de l'hélium utilisé. En Europe, on exige actuellement, pour certaines applications, une teneur de l'hélium de l'ordre du ppb (partie par billion) pour chaque type d'impuretés (hydrogène, néon, autres gaz rares, azote, ...).

Les procédés habituels d'épuration de l'hélium consistent à faire passer l'hélium à l'état gazeux et haute pression (10 à 200 bars), stocké en bouteilles ou en tubes, dans un épurateur cryogénique comportant un adsorbant refroidi généralement aux environs de 80 K (adsorption physique), ou un getter à la température ambiante (chimisorption des impuretés autres que les gaz neutres).

Cette technique est peu satisfaisante, car, d'une part, le stockage d'hélium gazeux est encombrant, et d'autre part, il faut utiliser plusieurs adsorbeurs en série pour le piégeage des impuretés gazeuses, ce qui est également encombrant et, de plus coûteux.

Par ailleurs, le document "The purity of liquid hélium", I.I. Abrikosova and A.I. Shal'nikov, CRYOGENICS, Avril 1971, p137-137, décrit un procédé de purification d'hélium liquide au moyen de filtres Petryanov permettant d'éliminer les particules aérosols chargées contenues dans l'hélium. Dans ce cas, les filtres sont placés directement dans le réservoir à hélium liquide.

En outre, le document EP-A-601601 enseigne un procédé de fabrication de fibres optiques, dans lequel de l'hélium gazeux est mis en oeuvre en tant que fluide de refroidissement, avant d'être récupéré, purifié, notamment, par filtration et enfin réutilisé.

L'invention a pour but de fournir un procédé plus économique et moins encombrant pour fournir de l'hélium ultra-pur.

A cet effet, selon le procédé de l'invention, on soutire l'hélium, sous forme liquide ou supercritique, d'un réservoir de stockage, on le filtre sous cette forme liquide ou supercritique, on vaporise l'hélium filtré, et on envoie l'hélium gazeux résultant à la conduite d'utilisation.

Avant de commencer ledit soutirage, on balaie le filtre et on le met en froid avec un courant d'hélium provenant notamment du réservoir de stockage ou de la capacité-tampon, l'hélium de balayage et de mise en froid étant évacué.

Le procédé suivant l'invention peut comporter une ou plusieurs des caractéristiques suivantes :
- on stocke temporairement l'hélium filtré, sous forme liquide ou supercritique, dans une capacité-tampon, et on prélève ledit hélium gazeux à partir de cette capacité-tampon;
- on régule le débit d'hélium liquide ou supercritique soutiré du réservoir de stockage à partir d'une mesure de la quantité d'hélium liquide ou supercritique contenue dans la capacité-tampon;
- on assure un maintien en froid du filtre;
- on fait directement passer l'hélium liquide ou supercritique du réservoir de stockage au filtre;
- après soutirage d'une quantité prédéterminée d'hélium du réservoir de stockage, on réchauffe le filtre, puis on le balaie et on le met en froid avec un courant d'hélium provenant notamment du réservoir de stockage ou de la capacité-tampon, l'hélium de balayage et de mise en froid étant évacué.

L'invention a également pour objet une installation de fourniture d'hélium ultra-pur destiné à la mise en oeuvre d'un procédé tel que défini ci-dessus. Cette installation comprend :
- un réservoir de stockage d'hélium liquide ou supercritique;
- un filtre adapté pour la filtration de l'hélium liquide ou supercritique, relié à la partie inférieure du réservoir de stockage, le filtre étant équipé d'un dispositif de maintien en froid.
- des moyens de vaporisation de l'hélium filtré, reliés à la sortie du filtre; et
- une conduite d'utilisation reliée à la sortie des moyens de vaporisation.

Suivant d'autres caractéristiques que peut présenter cette installation :
- elle comprend en outre une capacité-tampon de stockage temporaire de l'hélium liquide ou supercritique filtré, cette capacité-tampon étant équipée desdits moyens de vaporisation;
- elle comprend une vanne de régulation de débit disposée entre le filtre et la capacité-tampon et commandée par la quantité d'hélium liquide ou supercritique contenue dans cette capacité-tampon;
- elle comprend au moins un piquage d'évacuation muni d'une vanne, à l'entrée et/ou à la sortie du filtre.

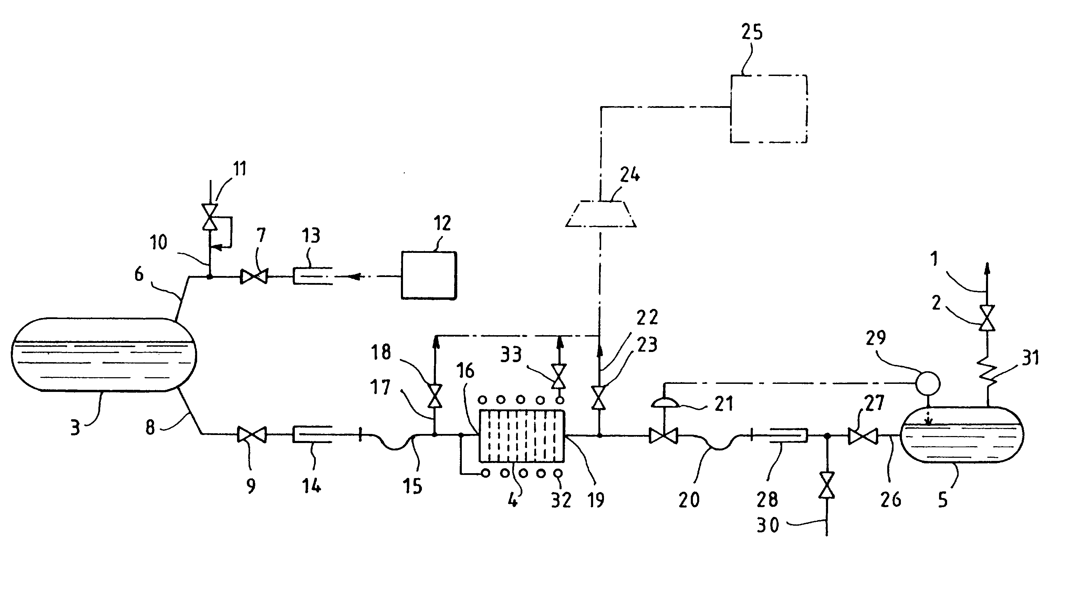

Un exemple de mise en oeuvre de l'invention va maintenant être décrit en regard du dessin annexé, dont la Figure unique représente schématiquement une installation conforme à l'invention.

L'installation représentée au dessin est destinée à fournir sous une pression de l'ordre de 6 bars de l'hélium gazeux ultra-pur, ayant typiquement une teneur en chaque impureté au plus égale au ppb, à une conduite d'utilisation 1 équipée d'une vanne 2. Cette installation comprend essentiellement un réservoir 3 de stockage d'hélium liquide, de capacité importante, par exemple 40 000 litres, un filtre 4 et une capacité-tampon 5.

Deux conduites sont reliées au réservoir 3 ; une conduite 6, munie d'une vanne 7 et reliée à la partie supérieure du réservoir, et une conduite 8 munie d'une vanne 9 et reliée à la partie inférieure du réservoir.

La conduite 6 permet d'évacuer un excès d'hélium gazeux afin de maintenir la pression du réservoir au-dessous d'une valeur limite prédéterminée, via un piquage 10 équipé d'une soupape de sécurité 11. La conduite 6 permet également d'injecter dans le réservoir de l'hélium gazeux froid sous pression provenant d'une source appropriée 12 tel qu'un réservoir auxiliaire d'hélium liquide muni de moyens de chauffage. Cette injection est réalisée en reliant la source 12 à un raccord terminal 13 de la conduite 6.

La conduite 8 est une conduite de soutirage d'hélium liquide et se termine par un raccord 14. Une conduite 15 reliée à l'entrée 16 du filtre 4 est reliée par son autre extrémité à ce raccord 14 et comporte un piquage 17 équipé d'une vanne 18.

De la sortie 19 du filtre 4 part une conduite 20 d'hélium ultra-pur équipée d'une vanne 21 de régulation de débit et, en amont de celle-ci, d'un piquage 22 muni d'une vanne 23.

Les piquages 17 et 22 sont typiquement reliés à l'aspiration d'un compresseur 24 dont le refoulement est lui-même relié à une centrale 25 de conditionnement d'hélium gazeux en bouteilles ou en tubes.

La capacité-tampon 5 comporte à son entrée une conduite de liaison 26 munie d'une vanne 27 et d'un raccord terminal 28 auquel la conduite 20 est reliée. La capacité-tampon comporte un détecteur de niveau 29 qui commande la vanne de régulation de débit 21. La conduite d'utilisation 1 comporte, en amont de la vanne 2, un dispositif 31 de réchauffage de l'hélium froid. Cette conduite 1 part préférentiellement de la partie supérieure de la capacité-tampon, comme représenté, de façon à éviter le prélèvement d'impuretés solides résiduelles éventuelles encore contenues dans le liquide. Toutefois, pour la production de débits gazeux élevés, la conduite 1 peut aussi prélever directement du liquide; le réchauffeur 31 joue alors également le rôle de vaporiseur.

Le revêtement interne ainsi que les accessoires de la capacité-tampon doivent être d'une qualité évitant la rétention et l'entrée d'impuretés (réservoir électropoli en particulier).

Le filtre 4 est un filtre micronique ou submicronique en tissu d'acier dont les dimensions de mailles sont adaptées au degré de pureté désiré pour l'hélium à distribuer. Ce peut être notamment un filtre utilisant une "toile d'acier", par exemple telle que celles commercialisées par la société française Gantois, ou un filtre en matériau fritté type PORAL, ou encore un filtre céramique.

Le fonctionnement de l'installation est le suivant.

Avant d'ouvrir la vanne d'utilisation 2, le filtre 4 est conditionné et mis en froid par ouverture des vannes 9 et 23. Ainsi, de l'hélium liquide traverse le filtre et réalise un balayage de ce dernier et des conduites 8 et 15, et, simultanément, leur mise en froid.

En variante, le conditionnement et la mise en froid peuvent être réalisés en ouvrant les vannes 27, 21 et 18, l'hélium liquide provenant alors de la capacité-tampon 5.

Lorsqu'une température inférieure à 6 K est atteinte dans le filtre, la vanne 23 ou 18 est fermée, la vanne 2 est ouverte, de même que la vanne 27 si elle ne l'était pas, et le soutirage d'hélium gazeux à partir de la partie supérieure de la capacité-tampon provoque l'ouverture de la vanne 21 et, par suite, le soutirage d'hélium liquide à partir du réservoir 3.

Si nécessaire, comme indiqué plus haut, ce soutirage peut être assisté au moyen d'hélium gazeux froid injecté dans le réservoir 3 via la conduite 6.

L'hélium liquide, du fait de sa très basse température d'équilibre (4,3 à 6K), présente la particularité suivante du point de vue des impuretés q'il contient. Seules les impuretés hydrogène et néon sont dissoutes, toutes les autres, telles que les autres gaz rares, l'azote, etc., ainsi que les éventuelles poussières, étant présentes sous forme solide. De plus, l'hydrogène et le néon sont présents dans une proportion inférieure au ppb à l'état dissous.

Par conséquent, toutes les impuretés qu'il faut éliminer jusqu'à une teneur inférieure au ppb, pour obtenir la qualité d'hélium requise pour l'utilisation en question, peuvent être retenues par le filtre 4, qu'il est facile de dimensionner en conséquence.

Après soutirage d'une quantité prédéterminée d'hélium liquide du réservoir 3, il convient de régénérer le filtre 4. Ceci s'effectue très simplement par simple réchauffage du filtre. Pour cela, on ferme toutes les vannes sauf les vannes 18 et 23, que l'on ouvre. L'hélium liquide contenu dans le filtre se vaporise, puis toutes les impuretés solides telles que l'azote se vaporisent également et s'échappent par les piquages 17 et 22. Quant aux éventuelles poussières, elles se trouvent dans l'hélium liquide en quantités si faibles qu'elles ne risquent pas de colmater le filtre.

Après cette opération, le filtre est de nouveau conditionné et mis en froid comme décrit plus haut, et le soutirage peut être repris.

Une prise d'échantillonnage 30, entre le raccord 28 et la vanne 27, permet de contrôler la pureté de l'hélium liquide délivré à la capacité-tampon 5.

Pour éviter que, lors des périodes où la vanne 21 est fermée, le filtre 4 se réchauffe et libère par vaporisation des impuretés solides piégées, on peut adjoindre à ce filtre un dispositif 32 de maintien en froid, par exemple un serpentin relié en amont à la conduite 15 et en aval, via une vanne de réglage de débit 33, à l'aspiration du compresseur 24.

Si les conditions de stockage de l'hélium dans la capacité-tampon 5 correspondent à un état supercritique de l'hélium, la procédure décrite plus haut reste applicable, mais la régulation, par la vanne 21, du débit d'hélium soutiré doit être commandée par d'autres moyens qu'un détecteur de niveau, par exemple à partir d'une pesée de la capacité-tampon, laquelle est alors montée sur une bascule.

Outre le faible encombrement et la simplicité de l'installation, celle-ci présente également l'avantage de conserver l'hélium froid jusqu'à la conduite d'utilisation. L'hélium gazeux véhiculé par cette dernière peut donc être directement utilisé pour des applications où une basse température est nécessaire.

Si nécessaire, la capacité-tampon peut être équipée de moyens de chauffage pour favoriser la vaporisation et éventuellement le réchauffage de l'hélium soutiré de cette capacité-tampon.

La capacité-tampon 5 peut être disposée à poste fixe sur le site d'utilisation de l'hélium ultra-pur. En variante, il peut s'agir d'une capacité mobile qui, après remplissage de la manière décrite plus haut, est transportée sur le site d'utilisation et reliée à la conduite 1. Dans ce cas, on met en oeuvre les procédures de changement de récipients habituelles dans les industries qui consomment des gaz ultra-purs.

Il est à noter que si la capacité-tampon 5 a un volume important, par exemple de l'ordre de 10 000 1, on peut supprimer la régulation 21-29 ainsi que le dispositif 32 de maintien en froid du filtre. La procédure utilisée est alors la suivante :
- mise en froid et conditionnement du filtre 4;
- remplissage total de la capacité-tampon 5;
- utilisation de l'hélium qu'elle contient;
- régénération, mise en froid et conditionnement du filtre;
- remplissage de la capacité-tampon; et ainsi de suite.

## Revendications

1. Procédé pour fournir à une conduite d'utilisation (1) de l'hélium ultra-pur, dans lequel on soutire de l'hélium, sous forme liquide ou supercritique, d'un réservoir de stockage (3), on le filtre sous cette forme liquide ou supercritique (en 4), on vaporise l'hélium filtré, on envoie l'hélium gazeux résultant à la conduite d'utilisation (1), et dans lequel, avant de commencer ledit soutirage, on balaie le filtre (4) et on le met en froid avec un courant d'hélium provenant notamment du réservoir de stockage (3) ou de la capacité-tampon (5), l'hélium de balayage et de mise en froid étant évacué (en 17, 22).

2. Procédé suivant la revendication 1, caractérisé en ce qu'on stocke temporairement l'hélium filtré, sous forme liquide ou supercritique, dans une capacité-tampon (5), et on prélève ledit hélium gazeux à partir de cette capacité-tampon.

3. Procédé suivant la revendication 2, caractérisé en ce qu'on régule (en 21) le débit d'hélium liquide ou supercritique soutiré du réservoir de stockage (3) à partir d'une mesure (en 29) de la quantité d'hélium liquide ou supercritique contenue dans la capacité-tampon (4).

4. Procédé suivant la revendication 3, caractérisé en ce qu'on assure (en 32) un maintien en froid du filtre (4).

5. Procédé selon la revendication 1, caractérisé en ce qu'on maintient la pression du réservoir (3) de stockage au-dessous d'une valeur limite prédéterminée en évacuant l'excès d'hélium gazeux dudit réservoir (3) de stockage.

6. Procédé suivant l'une quelconque des revendications 1 à 5, caractérisé en ce qu'on fait directement passer l'hélium liquide ou supercritique du réservoir de stockage (3) au filtre (4).

7. Procédé suivant l'une quelconque des revendications 1 à 6, caractérisé en ce que, après soutirage d'une quantité prédéterminée d'hélium du réservoir de stockage (3), on réchauffe le filtre (4), puis on le balaie et on le met en froid avec un courant d'hélium provenant notamment du réservoir de stockage (3) ou de la capacité-tampon (5), l'hélium de balayage et de mise en froid étant évacué (en 17, 22).

8. Installation de fourniture d'hélium ultra-pur, comprenant, montés en série :
- un réservoir (3) de stockage d'hélium liquide ou supercritique;
- un filtre (4) adapté pour la filtration de l'hélium liquide ou supercritique, relié à la partie inférieure du réservoir de stockage (3); le filtre (4) étant équipé d'un dispositif (32) de maintien en froid;
- des moyens (5) de vaporisation de l'hélium filtré, reliés à la sortie du filtre (4); et
- une conduite d'utilisation (1) reliée à la sortie des moyens de vaporisation.

9. Installation suivant la revendication 8, caractérisée en ce qu'elle comprend en outre une capacité-tampon (5) de stockage temporaire de l'hélium liquide ou supercritique filtré, cette capacité-tampon formant notamment lesdits moyens de vaporisation.

10. Installation suivant la revendication 9, caractérisée en ce qu'elle comprend une vanne de régulation de débit (21) disposée entre le filtre (4) et la capacité-tampon (5) et commandée par la quantité d'hélium liquide ou supercritique contenue dans cette capacité-tampon.

11. Installation selon la revendication 8, caractérisé en ce que le dispositif (32) de maintien en froid est un serpentin relié, en amont, à une conduite (15) et, en aval, à l'aspiration d'un compresseur (24).

## Patentansprüche

1. Vorrichtung zur Versorgung einer Nutzungsleitung (1) mit ultrareinem Helium, bei dem man Helium in flüssiger oder überkritischer Form aus einem Vorratsbehälter (3) abzieht, es in dieser flüssigen oder überkritischen Form filtriert (bei 4), das filtrierte Helium verdampft, das erhaltene gasförmige Helium der Nutzungsleitung (1) zuführt, und bei dem man vor Beginn des Abziehens das Filter (4) spült und mit einem insbesondere aus dem Vorratsbehälter (3) oder Pufferbehälter (5) stammenden Heliumstrom kühlt, wobei das zum Spülen und Kühlen verwendete Helium abgeführt wird (bei 17, 22).

2. Verfahren nach Anspruch 1, dadurch gekennzeichnet, daß man das filtrierte Helium in flüssiger oder überkritischer Form vorübergehend in einem Pufferbehälter (5) lagert und das gasförmige Helium aus dem Pufferbehälter austrägt.

3. Verfahren nach Anspruch 2, dadurch gekennzeichnet, daß man die Durchflußmenge an aus dem Vorratsbehälter (3) abgezogenem flüssigem oder überkritischem Helium auf der Basis einer Messung (bei 29) der in dem Pufferbehälter (4) enthaltenen Menge an flüssigem oder überkritischem Helium reguliert (bei 21).

4. Verfahren nach Anspruch 3, dadurch gekennzeichnet, daß man die anhaltende Kühlung des Filters (4) sicherstellt (bei 32).

5. Verfahren nach Anspruch 1, dadurch gekennzeichnet, daß man den Druck im Vorratsbehälter (3) unter einem vorgegebenen Grenzwert hält, indem man den Überschuß an gasförmigem Helium aus dem Vorratsbehälter (3) abführt.

6. Verfahren nach einem der Ansprüche 1 bis 5, dadurch gekennzeichnet, daß man das flüssige oder überkritische Helium aus dem Vorratsbehälter (3) direkt dem Filter (4) zuführt.

7. Verfahren nach einem der Ansprüche 1 bis 6, dadurch gekennzeichnet, daß man nach dem Abziehen einer vorgegebenen Heliummenge aus dem Vorratsbehälter (3) das Filter (4) erwärmt, spült und mit einem insbesondere aus dem Vorratsbehälter (3) oder Pufferbehälter (5) stammenden Heliumstrom kühlt, wobei das zum Spülen und Kühlen verwendete Helium abgeführt wird (bei 17, 22).

8. Anlage zur Lieferung von ultrareinem Helium, enthaltend der Reihe nach:
- einen Vorratsbehälter (3) für flüssiges oder überkritisches Helium;
- ein an den unteren Teil des Vorratsbehälters (3) angeschlossenes Filter (4) zur Filtration des flüssigen oder überkritischen Heliums, das mit einer Kalthaltungsvorrichtung (32) ausgestattet ist;
- an den Ausgang des Filters (4) angeschlossene Einrichtungen (5) zur Verdampfung des filtrierten Heliums und
- eine an den Ausgang der Verdampfungseinrichtungen angeschlossene Nutzungsleitung (1).

9. Anlage nach Anspruch 8, dadurch gekennzeichnet, daß sie außerdem auch noch einen Pufferbehälter (5) zur vorübergehenden Lagerung des filtrierten flüssigen oder überkritischen Heliums enthält, der insbesondere die Verdampfungseinrichtungen bildet.

10. Anlage nach Anspruch 9, dadurch gekennzeichnet, daß sie ein Durchflußregelventil (21) enthält, das zwischen dem Filter (4) und dem Pufferbehälter (5) angeordnet ist und durch die im Pufferbehälter enthaltene Menge an flüssigem oder überkritischem Helium gesteuert wird.

11. Anlage nach Anspruch 8, dadurch gekennzeichnet, daß es sich bei der Kalthaltungsvorrichtung (32) um eine stromaufwärts an eine Leitung (15) und stromabwärts an einen Einlaß eines Verdichters (24) angeschlossene Schlange handelt.

## Claims

1. Process for supplying a consumption line (1) with ultra-pure helium, in which process helium, in liquid or supercritical form, is withdrawn from a storage tank (3), the helium in this liquid or supercritical form is filtered (at 4), the filtered helium is vaporized, and the resulting helium gas is sent into the consumption line (1), and in which process, before the said withdrawal begins, the filter (4) is flushed and cooled using a stream of helium coming in particular from the storage tank (3) or from the buffer tank (5), the flushing and cooling helium being discharged (at 17, 22).

2. Process according to Claim 1, characterized in that the filtered helium, in liquid or supercritical form, is temporarily stored in a buffer tank (5) and the said helium gas is drawn off from this buffer tank.

3. Process according to Claim 2, characterized in that the flow of liquid or supercritical helium withdrawn from the storage tank (3) is regulated (at 21) on the basis of a measurement (at 29) of the amount of liquid or supercritical helium contained in the buffer tank (5).

4. Process according to Claim 3, characterized in that the filter (4) is kept cold (at 32).

5. Process according to Claim 1, characterized in that the pressure in the storage tank (3) is maintained below a predetermined limiting value by discharging the excess helium gas from the said storage tank (3).

6. Process according to any one of Claims 1 to 5, characterized in that the liquid or supercritical helium is passed directly from the storage tank (3) to the filter (4).

7. Process according to any one of Claims 1 to 6, characterized in that, after a predetermined amount of helium has been withdrawn from the storage tank (3), the filter (4) is warmed, then flushed and cooled using a stream of helium coming in particular from the storage tank (3) or from the buffer tank (5), the flushing and cooling helium being discharged (at 17, 22).

8. Plant for supplying ultra-pure helium, comprising, mounted in series:
- a tank (3) for storing liquid or supercritical helium;
- a filter (4) suitable for filtering the liquid or supercritical helium, connected to the lower part of the storage tank (3), the filter (4) being equipped with a device (32) for keeping it cold;
- means (5) for vaporizing the filtered helium, these being connected to the outlet of the filter (4); and
- a consumption line (1) connected to the outlet of the vaporizing means.

9. Plant according to Claim 8, characterized in that it furthermore comprises a buffer tank (5) for temporarily storing the filtered liquid or supercritical helium, this buffer tank forming in particular the said vaporizing means.

10. Plant according to Claim 9, characterized in that it comprises a flow-regulating valve (21) placed between the filter (4) and the buffer tank (5) and controlled by the amount of liquid or supercritical helium contained in this buffer tank.

11. Plant according to Claim 8, characterized in that the device (32) for keeping the filter cold is a coil connected, on the upstream side, to a line (15) and, on the downstream side, to the intake of a compressor (24).
